# EUROPEAN PATENT SPECIFICATION

(11) **EP 0 452 644 B1**
(45) Date of publication and mention of the grant of the patent: **09.07.1997**
(21) Application number: 91102982.5
(22) Date of filing: 28.02.1991
(51) Int. Cl.: H04L 1/00, H04Q 7/10

(54) **Controller for a signalling system**
Steuerung für Signalvorrichtung
Commande pour système de signalisation

(30) Priority: 17.04.1990 GB 9008537
(43) Date of publication of application: 23.10.1991
(73) Proprietor: MOTOROLA ISRAEL LIMITED, Tel Aviv 67899 (IL)
(72) Inventor: Newman, Yona, Ra-Anana 43213 (IL)
(74) Representative: Dunlop, Hugh Christopher

(56) References cited:
- WO-A-87/01484
- WO-A-87/03444
- WO-A-90/02459

## Description

### Background of the Invention

This invention relates to a controller for control of transmission means in a signalling system.

### Summary of the Prior Art

In prior art controllers, it has been necessary to program the software of the controller to accommodate the particular signalling schemes that a customer requires. Such schemes include MDC-1200, MDC-1600, Select 5, Quick Call 1, Quick Call 2, DTMF, Digital Dial, Prism, ZVEI Binary, POCSAG, Single Tone etc. A customer may wish to serve one, two or more such signalling schemes from a single controller connected to different transmitters, or to a transmitter and a modem.

The need to design each system to accommodate the customer's needs as to the expense of the system and the time within which it can be delivered to the customer.

There is a need for a controller which has a design which is structured to accommodate many different signalling schemes and is sufficiently flexible to include new signalling schemes as they are devised.

International patent application number WO90/02459 discloses a controller for controlling a radio transmitter base station in a communication system. The controller includes a keyboard and translation means for converting data signalling information into an internally compatible format.

### Summary of the Invention

According to the invention, there is provided a controller for control of transmission means in a signalling system, the controller comprising a keyboard, a data base, first and second translation means and transmission means, characterised in that the data base comprises a first plurality of buffers, each buffer having a first data field for defining a signalling format, a second data field for identifying a party or parties to be called, a third data field for defining a physical communications path and a fourth data field for defining an operation code and optional data;
the controller being arranged such that upon initiation of a transmit command, a data buffer sets up a call and for that call the signalling format controls the first translation means for defining the translation of data input at the keyboard into data in the second and fourth data fields and the signalling format for its transmission, the communications path data controls the transmission means setup and the format and the operation code controls the second translation means for translation of the operation code and optional data into the transmitted data package.

Thus, the invention provides a universal data base structure and translation modules controlled by formatting information stored in the data base to interpret the meaning of key strokes at the keyboard and to translate data into the correct format for transmission.

The transmission means may be a radio base station transmitter or a modem, or other such means.

The particular buffer which at any given moment is to control the transmission operation of the controller is, in a preferred embodiment, identified by displaying a parameter unique to the party to be called (eg. an ID or name).

An alias buffer may be provided as a look-up table correlating ID numbers with textual names.

In a further aspect of the invention, there is provided a controller for control of a radio receiver in a signalling system, the controller comprising a display, a data base, translation means and receiver means,
characterised in that the data base comprises a first plurality of buffers each buffer having a first data field for defining a signalling format, a second data field for defining a party or parties sending or receiving a call, a third data field for defining a physical communications path and a fourth data field for defining an operation code and data field;
the controller being arranged such that upon receipt of a message, a data buffer is addressed by that message and for that message, the signalling format controls the translation means for defining the translation of data received into data to be stored in the fourth data field and/or to be displayed on the display.

Accordingly, in the receive mode, the received ID or operation code identifies the buffer which is to control the translation modules for translation of the incoming data.

### Brief Description of the Drawings

Figure 1 shows a controller in accordance with the invention connected to an input/output device and a base station transceiver.

Figure 2 shows the contents of a transmit or receive buffer of the data base of Figure 1.

Figure 3a shows an emergency buffer.

Figure 3b shows a quick dial buffer.

Figure 3c shows an alias buffer.

Figure 4 shows one of the keypads of Figure 1 and

Figure 5 shows a control signal for the base station of Figure 1.

### Detailed Description of the Preferred Embodiment

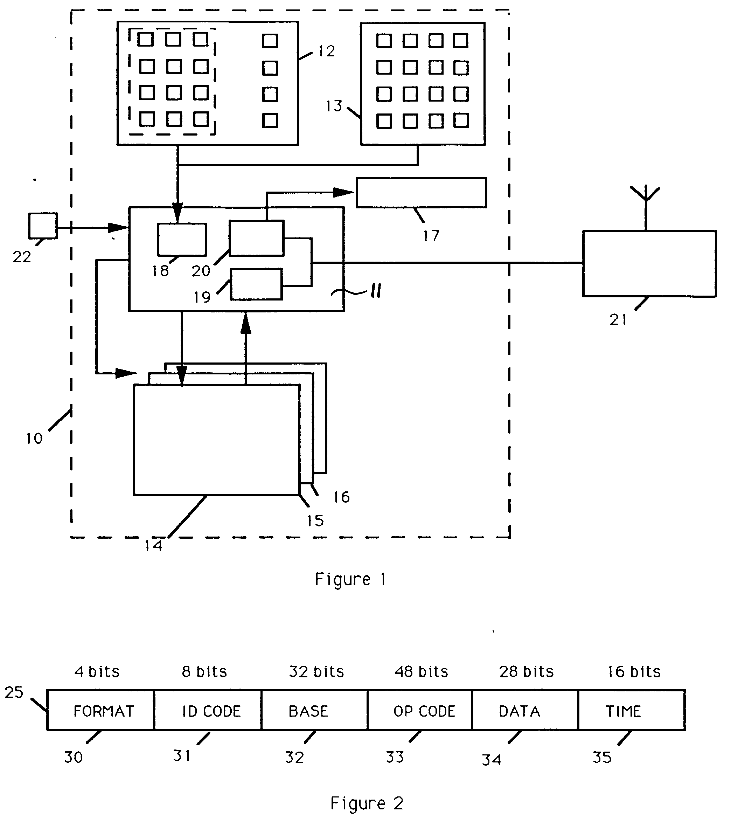

Referring to Figure 1, there is shown a radio base station controller 10 comprising a central control unit 11, keyboards 12 and 13, a data base 14 comprising various buffer sets 15, 16 etc and a display 17. The control unit 11 is shown as having three translation modules (subroutines). These are keyboard translation module 18, transmit translation module 19 and receive translation module 20. The controller 10 is connected to at least one base station 21 and may have an input device 22, such as a modem connection connected to it. Various other audio connections are provided to and from the controller 10 and between the controller 10 and the base station 21. As the present invention is concerned with signalling (ie. data), the various audio connections are not shown.

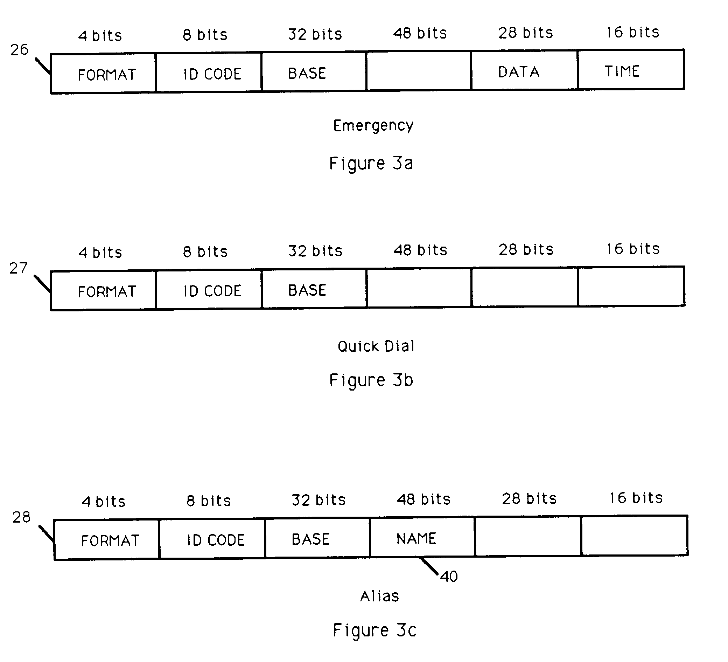

The data base 14 comprises seven buffer sets (of which only three are shown in Figure 1). These buffer sets represent: transmit, receive 1, receive 2, emergency, quick dial and alias buffer sets. The structure of a buffer of the first three buffer sets is shown in Figure 2. The structure of a buffer of each of the other three sets is shown in Figures 3a, 3b and 3c respectively. Other buffer sets may be provided - eg. transmit inhibit, transmit console ID, call ID.

In general, the apparatus shown operates by receiving data from the input output device 22 or the keyboards 12 and 13 via keyboard translation module 18 and passing this to the transmitter 21 via transmit translation module 19, for transmission to a mobile radio unit or other receiver, and by receipt of data signals at the base station 21, which are passed to the controller 10, via receive translation module 20, for storage in the data base 14 and/or for output from the input/output device 22 and/or display on the display 17.

Whenever data is transmitted or received, it is done so under the control of a buffer in the data base 14. In transmission, the buffer selected is the relevant buffer for the party to be called and in reception, the buffer selected is that which corresponds to the party addressed by the incoming message. In each case, the data field 30 identifies the format of the signalling scheme relevant for that party. The format information 30 controls the translation modules 18, 19 and 20 for: translation of keys of keyboard 12 into the characters which are relevant for that signalling scheme; translation of data to be transmitted from a standard format in memory to the format specific to that signalling scheme; and translation of the received data into a standard format for display or storage.

These three aspects of the operation of the controller 10 will be considered in turn.

### Keyboard

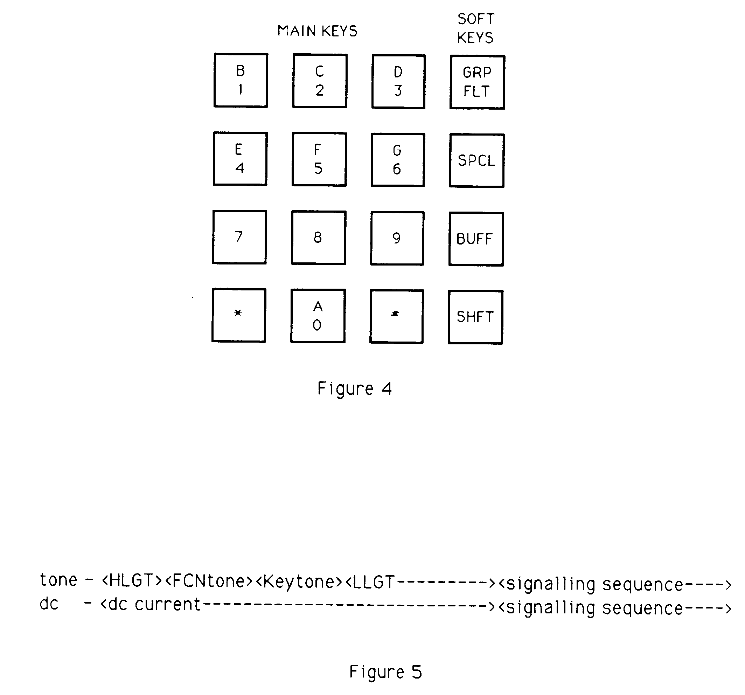

The keyboard 12 is shown in Figure 4. It is a feature of the controller according to the preferred embodiment of the invention that the same keyboard can be used for any signalling scheme.

The main key definitions are as follows:-
0 - 9 are number entry keys
* as part of an ID code entry is used as a wild card, except for DTMF where it is a valid number
* by itself is the generic enable transmit function
# is the generic clear display/pending operation function, except for DTMF where it is a valid number.

As well as the twelve main keys on the left, there are four soft keys on the right. The soft keys can be pressed by themselves or together with one of the other keys. The functions of the soft keys are shown on Table 1.

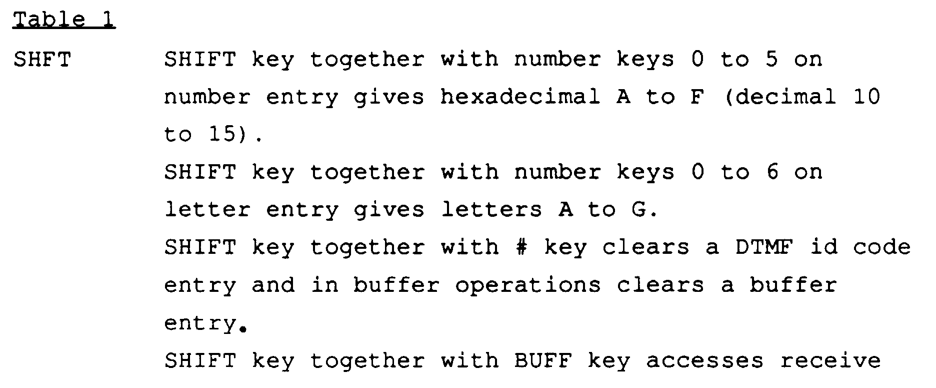

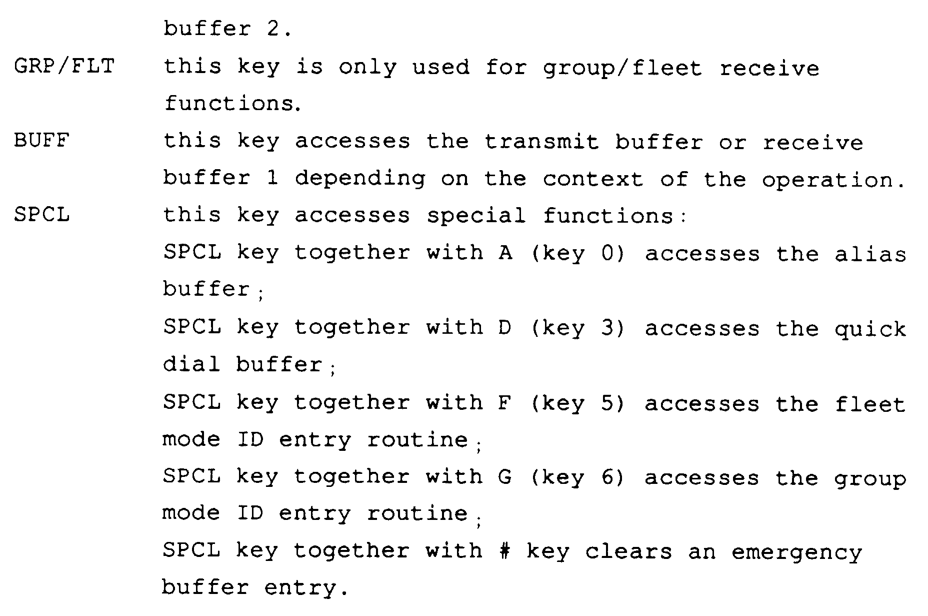

Keyboard 13 (Figure 1) has sixteen customisable keys which may be programmed to perform the same functions as some of the above key combinations.

Translation module 18 interprets the meaning of the various keys, in accordance with the format information in section 30 of the buffer. For example, if the format information 30 identifies that the current format is DTMF, the pressing of key * will be interpreted as that DTMF tone, whereas in other formats, it will have other meanings.

### Transmit

Before data can be transmitted from the base station 21, a data packet must be built by the central control unit 11, the physical parameters of the base station 21 must be set (eg. signalling modulation, baud rate, channel etc) and other aspects of the system have to be controlled to suit the particular signalling scheme selected. Likewise, when a signal is received, it must be decoded before the content of the message can be stored or displayed. The purpose of the data base 14 is to facilitate carrying out of these functions.

The buffer set 15 comprises the transmit buffers, each having the structure shown in Figure 2. Referring to that Figure, the buffer comprises various data fields: format information, ID code, base station control information, an operation code, data and the transmit time. The number of bits allocated in the buffer to store these various items of information are shown in the figure.

The format information 30 identifies the signalling scheme to be used. Such schemes include MDC-600, MDC-1200, DTMF, Digital Dial, Select 5, Quick Call 1 or 2 etc. Virtually any other existing signalling scheme can be catered for, and new signalling schemes not yet devised can be included. One of the 16 available format codes is reserved for the alias function, which is described below.

The ID code 31 identifies the party to be called. An ID code is a number of up to 12 digits, where each digit uses the hex range $0 to $F. The translation of the ID code to the specific transmit or display format required by the signalling scheme is done by the transmit translation module 19 or the display translation module 20. The base station control information 32 controls which base station is to be used from various base stations that may be connected to the controller 10 and controls various aspects of that base station, including modulation type, channel, baud rate etc. It can also include control of operation of repeater access.

The operation code 33 is internal to the controller 10 and controls the central controller unit 11.

The data 34 is the actual data to be transmitted in the data packet. The time 35 is the time of transmission.

The transmit buffer set holds the last fifteen transmitted messages on encode only systems, or when an enhanced 4 X 40 character display 17 is fitted, otherwise it holds the last transmitted message.

The buffer is LIFO.

Accompanying each ID code are associated base station transmit parameters. These include:
Base station 1 to 4 or Phone patch 1, 2,
Transmit frequency 1 to 8,
Transmit PL code 1 to 8,
Base state (Coded/Clear, Main/Standby, Alternate Line),
RA if used before tx.

Note: transmit with or without PL is implicit in the F or PL parameter, and does not have to be defined here. Similarly, the pretime parameter is defined per base station. The ID code may be a pointer to an entry in the quick dial or alias buffers, and these two buffers can also include the base station parameters. If the ID code points to an alias entry then the alias name will be displayed and not the ID number. Similarly, the base station parameters can be pointers to entries in the alias buffer. Each ID code is accompanied by four bytes; op. code, time stamp (2) and data. The op. code byte records the type of transmission, and the time stamp byte the time of the transmission (in minutes only since we can reconstruct the rest from the current time). The data byte holds any op. code specific data transmitted.

The first stage in any transmit sequence is to select the ID code to be used. The ID code identifies the party to be called. The controller 10 normally uses the currently displayed ID for any transmit sequence, so the required ID can be taken from one of the buffers (as will be explained below), or entered manually from the keyboard 12 (Figure 4). Certain signalling schemes (such as DTMF Digital Dial) allow the user to select and send manually the ID, after the base station has been keyed. The controller 10 recognizes this state if the user clears the display (with # key) and then selects the transmit operation. In this case, only manual keyboard entry is allowed.

For manual keyboard ID entry, a normal (unit) ID code is entered using keys 0 - 9 for the numbers and SHFT together with keys 0 - 5 for the hexadecimal numbers $A to $F. The values allowed for an ID are signalling scheme dependent. Some signalling schemes allow one or more of the ID digits to be wild cards and the * key is used for this. DTMF signalling can use * and # as valid ID digits. Some signalling schemes use special ID codes for group/fleet operations and these are supported by SPCL together with 5(F) or 6(G) keys. Some schemes derive the group/fleet mode from certain digit sequences and for these the ID is entered as if it was a unit code. The programmer can also define a range of ID values that is a sub-set of the normal range, and it can restrict the use of the wild card entry to specific digit positions only or to one digit at a time.

The table below lists the allowable ID ranges and key entries for each signalling scheme.

**Table 2 -**

| Unit ID codes | | | |
|---|---|---|---|
| System | Keys allowed | Unit ID range | Internal Buffer Format |
| | | | |
| MDC-600 | 0 to 9 | 0001 to 9999 | 4 digits, 0 to 9 |
| MDC-1200 | 0 to 9, A-E | 0001 to DEEE | 4 digits, 0 to E |
| DTMF | 0 to 9, * # | 1 to 12 digits | 12 digits, 0-9, A (=*), B(=#) |
| Dig. Dial | 0 to 9 | 1 to 8 digits | 8 digits, 0 to 9 |
| QCII | 0 to 9, A, B | 100 to 9BB | 3 digits, 0 to 9, A,B |

**Table 3 -**

| Wild Card codes | | |
|---|---|---|
| System | Entry Formal | General Buffer Format |
| | | |
| MDC-600 | * (eg. 12*3) | 4 digits, 0-9 and F (eg 12F3) |
| | | |
| MDC-1200 | * (eg. 12*E) | 4 digits, 0 to F (eg 12FE) |
| DTMF | Not used | |
| Dig. Dial | Not used | |
| QCII | Not used | |

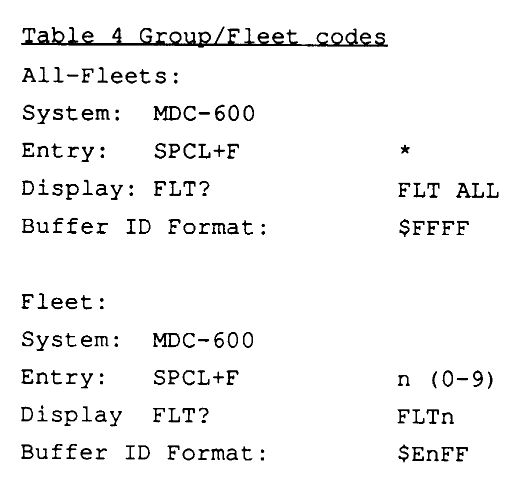

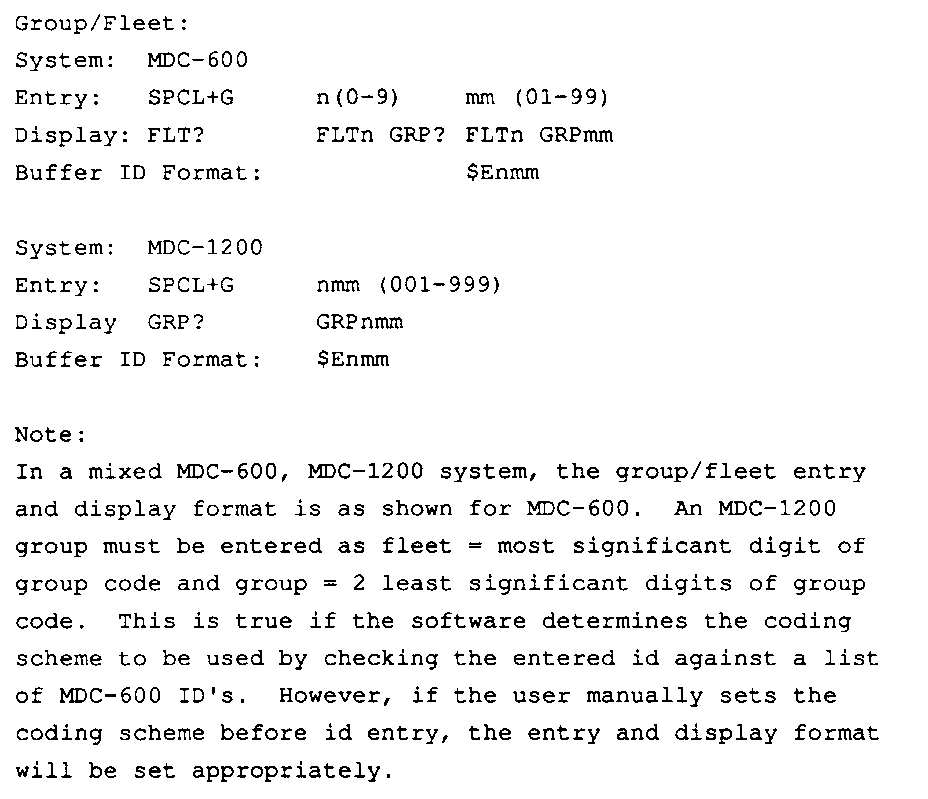

### Encode (Transmit) Functions

After selecting the ID of the party to be called, the transmit function must be selected. For this, one of the pre-defined function keys is pressed. Some functions require an additional data entry. The display will prompt for this. Some functions can only be selected via the menus. The table below shows the different possibilities.

**Table 5**

| Function Type | Description |
|---|---|
| 1. PTT | PTT initiated signalling tx |
| 2. Response | Signalling tx in response to received data |
| 3. TX + Data | User initiated tx with user entered data |
| 4. TX only | User initiated tx without data |
| 5. TX w/o ID | User initiated tx without ID entry |

The initiation by each of these transmit functions will now be described in turn. Note, in the following description, the signalling system is given a code as follows: MDC-1200 = 1; 1 tone = 2; 2 tone = 3; MDC-600 = 4; Select 5 = 5.

In all cases, the base station transmit control, tone or dc signal, as in Figure 5, is sent first to put the base station into transmit mode, followed by the signalling sequence.

### PTT (Push-to-Talk)

A PTT initiated signalling sequence can be followed by other user initiated sequences and/or by voice. The sequences can be cascaded. For example, RAT (repeater access tone) followed by PTT ID. Note, however, that RAT must always be first. For the manual RAT, Select Call needs a user key entry. Other examples follow in the tables below.

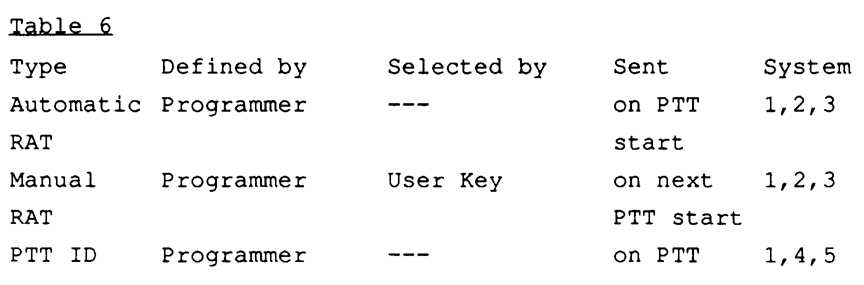

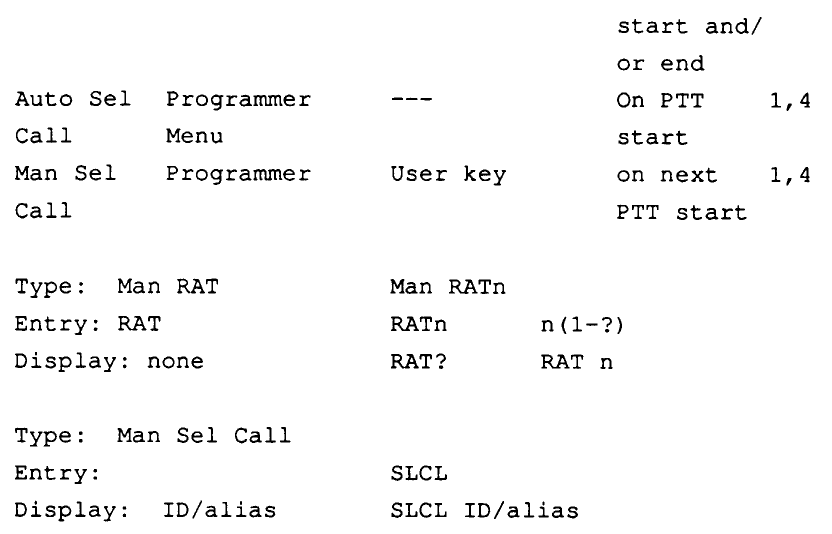

### Response

This transmit function is a response to a received signalling sequence. Examples are shown in Table 7.

**Table 7**

| Type | Description | System |
|---|---|---|
| ACK | Automatic acknowledgment | 1,4,5 |
| NACK | Negative ack, ID is correct but sequence not recognised | 1,4 |
| Data | Data response to interrogation sequence | 1,4,5 |
| | | |
| Type: Response | | |
| Entry: none | | |
| Display: none | | |

### TX + Data

This transmit function is a user initiated transmit sequence with user-entered data. Examples are shown in table 8. The controller state is normal ie with PL squelch before data entry. After data entry, the base station or controller may be put into monitor mode before transmit or the transmission made directly.

**Table 8**

| Type | Description | System |
|---|---|---|
| Simple | The data entry defines the type of tx | 1,4,5 |
| Interrogation | The data entry defines the rx response | 1,4,5 |
| Sequential | The data entry defines a repeated tx sequence | 1,4,5 |
| | | |
| Type: Simple (eg. enhanced call alert) | | |
| Entry: | fcn | type |
| Display: ID/alias | fcnname fcntype? | fcnname type flashing |
| | | |
| Type: Interrogation (eg. send current group) | | |
| Entry: | fcn | data |
| Display: id/alias | fcnname data? | fcnname data flashing |
| | | |
| Type: Sequential (eg. poll operator status, system check) | | |
| Entry: | fcn | sequence data |
| Display: id/alias | fcnname seq data? | fcn name flashing |

### TX Only

This transmit function is a user-initiated transmit sequence with no user-entered data. An example is radio check. The entry, display and controller state are as follows:

| | | |
|---|---|---|
| Entry: | | fcn |
| Display: | ID/alias | fcnname flashing |
| Controller state: | normal rx with PL squelch | monitor mode (carrier squelch) |

### TX without ID

This transmit function is a user-initiated transmit sequence without any ID entry. An example is DTMF or Digital Dial manual transmit. The entry, display and controller state are as follows:

| | | |
|---|---|---|
| Entry: | | fcn |
| Display: | blank | fcnname flashing |
| Controller state: | normal rx with PL squelch | monitor mode (carrier squelch) |

After selecting the transmit function, the function must be enabled. The transmit sequence is started by pressing the ∗ key. Optionally, selecting the function also enables the transmit sequence.

If the base station is in use (LOTL or channel monitor active) and "polite" mode is in force, then the display first shows "wait" flashing until the busy condition is over. The controller sends a tone or a DC control signal to the base station 21 and optional RAT. After a pre-time delay, it sends the data for transmission. The display is steady to indicate the data transmit mode and a side-tone (optional) is heard on the controllers speaker (not shown in the figures). The display flashes whilst waiting for a response.

A PTT initiated transmit sequence is started by the user pressing the PTT button or by an external (paging) PTT input. Response transmit sequences are initiated automatically.

PTT initiated and response data sequences are not repeated. Transmit data sequences may be sent once only, repeated until a data response is received, repeated until a specific data response is received, or repeated a given number of times.

At the end of a complete transmit sequence, including all re-tries or repetitions, there is always a wait period (dead time) before another transmit sequence can be started.

Examples are as follows.
- Type: Examples
- Once only: PTT ID, ACK, DTMF, Quick-Call II, Group Call
- Response required: Unit Call, Status Request
- Specific resp req: Status Poll
- Repeated sequence: System Check

- Type:: Once only
- TX/RX:: TX data sequence rx
- Controller state:: tx dead time

- Type:: Response required
- TX/RX:: TX seq Wait for response
- Controller state:: 1st tx random time
Repeat sequence until a response received or finished defined number of tries.
- Type:: Specific response required
- TX/RX:: TX seq Wait for resp Resp rcvd
- Controller state:: 1st tx random time record resp
Repeat sequence until finished defined number of tries.

For each of the above transmit functions, an associated operation code 33 is stored in the respective buffer in data field 15. When the transmit function is enabled, the control unit 11 reads the format 30 and the op code 33 from the buffer and uses this information to construct a transmission package in a translation sub-routine in control unit 11.

For each type of transmit sequence, the programmer defines whether it is to be sent to the printer output port. This definition also includes whether each repetition or retry is printed etc.

### Receive

Each receive buffer of the receive buffer set has the same layout as a transmit buffer of the transmit buffer set 15, as shown in Figure 2, however the format 30 identifies the type of signalling scheme received, the ID code 31 identifies the party sending the message, the base station control information 32 identifies the settings of the base station during reception of the message, the data 34 is the received message and the time 35 is the time of receipt.

The receive 1 buffer set holds the last fifteen received and displayed ID codes. The buffer can be LIFO or FIFO. The ID codes are placed in this buffer by the receive translation module 20, which also translates them from the specific receive format to the general format mentioned above. Accompanying each ID code are associated base station receive parameters. The ID code and the base station receive parameters may be pointers to entries in the alias buffer. The ID code is also accompanied by an op. code, a time stamp and a data byte. The op. code byte records the received operation, and the time stamp byte the time of transmission from the mobile (again in minutes). The data byte holds any op. code specific data.

The receive 2 buffer set is similar to the receive 1 buffer set, but serves for received ID codes that were not displayed.

### Decode (receive) functions

The receive functions are largely the reverse of the transmit functions. The aim is to enable any received message to be stored in a uniform manner in memory. For this purpose, the central control unit 11 selects one of the receive buffers of the receive buffer set 16. The end result of the receive operation is the insertion of the received data in the data field 34 or a temporary buffer (not shown in the figures).

The programmer defines which receive functions are enabled, and into which buffer they are stored. The buffer type in turn defines whether the receive function is displayed or not, as will be explained below. The programmer also defines whether a response will be sent, and whether the received function affects the audio console muting.

The printer port output for each receive function is also enabled by the programmer.

Various conditions can be set up for reception of data. For example, the controller can be programmed to (i) accept all messages; (ii) accept a message if the receive ID is within an ID/Group/Fleet range; or (iii) accept a message if the status key matches. These examples are now described in detail.

### Accept all

The programmer defines which received functions are accepted by the controller 10. For each signalling scheme the programmer gives a list of the possible receive functions.

### Accept if within ID/group/fleet ranges

The programmer defines a range of unit ID codes and fleet/group ID codes. For each received function which will be accepted, the programmer defines if it will also be tested against the unit ID range (also known as the monitor range). Testing of group/fleet codes against the programmer defined range is set by the programmer, but the general group/fleet rang check can be set or cleared by the use of the soft key "GRP/FLT".

### Accept if the status key matches

After passing the above checks, certain received functions can be subjected to a further check of status bounds. The programmer or menu defines a status key which can be exclusive (one value only), or inclusive (lower and upper limits). The range allowed is normally from 0 to 255.

### Display Receive Function

The programmer or menu defines whether the received function is stored in receive buffer 1 (and is therefore displayed) or in receive buffer 2 (which is not displayed).

### ACK Received Function

The programmer can define whether the controller will send an acknowledge signal (ACK) to each receive function which normally receives one.

The programmer defines which received functions are also sent to the printer port.

In normal received mode, the controller also mutes the received audio until a pre-defined level of audio activity is detected. The audio mute is then extended to the period of time it takes for the signalling detection software to determine if the audio is voice or signalling. If it is voice, then the audio is unmuted. On the other hand, if the signalling is detected, the audio remains muted for the duration of the signalling sequence. At the end of this period, the audio is unmuted, depending on the specific signalling function received.

Signalling functions which are associated with start of voice, such as selective calls or PTT ID will also unmute audio. Similarly functions which are not associated with voice, such as status or messages, will normally not unmute audio.

Received signalling sequences which are detected in the middle of a voice reception will mute the audio for the duration of the sequence only.

### Emergency, Quick Dial and Alias

Each buffer of the emergency buffer set comprises all the information of a transmit or receive buffer except the operation code.

Each buffer of the quick dial has only the format, ID code and base station control information. This buffer is a pre-programmed list of ten ID codes or alias names with all associated base station parameters. Op. code, time stamp or data bytes are not needed.

The alias buffer set is essentially a look-up table correlating the ID code 31 with a name 40 and a format for calling that party. In other words, instead of having the ID code appear on the screen 17, the actual name of the party appears and the format which should be used for calling that party is already stored. The alias buffer set is a pre-programmed list of up to 400 alias names, and each name can be up to eight alpha-numeric characters. The alias names are linked either to an ID code, or a data field value in the general form, or to a base station parameter.

The transmit alias list buffer is also used to check for a match between a received unit ID and the ID alias list, or data value and the non-ID alias list. If a match is found then the alias name is substituted on the display and print outputs. In addition, bits in a qualifier field of the ID field can also qualify the console response to a given ID/data value. The bit actions are detailed below. A user par determines whether unqualified ID's/data field values are accepted or rejected. The qualified response then becomes the reverse of the general response.

### Registration

Registration is the process of registering or logging the presence or absence of users during any 24 hour period.

All users to be registered must have been entered into the alias list, and have two flag bits; registration require - set, registered - cleared or set depending on his status.

The period is defined by a start time in hours from 00 to 23. A repeat count is defined by a number 1 to 24.

1 means registration is active only once a day at the start time, 2 means twice a day - start time and start time + 12 hours, and so on. Since repeats must be in a whole number of hours, repeat counts 5, 7, 9, 10, 11, 13 to 23 are not allowed.

Registration can be active or passive. Active registration consists of polling each listed user with a predefined code which gives a response. If no response was obtained then the poll will be repeated again at the time set by the repeat count (see also registration qualifier, quiet/noisy registration). Passive registration consists of checking each incoming code to see if it is one of the listed user. The repeat count here determines at what time the console checks the state of the registration list. (Consider also registration qualifier, quiet/noisy registration).

The user ID in the alias list can have a qualifier bit set. On active registration, the qualifier bit tells the console to use a status poll and only register on a given status. The status required must be entered into the alias list, with the registration flag set. On passive registration, the qualifier bit tells the console to check also in the alias list for a status, message, or vehicle status with the registration flag set. Thus a listed user sending a non listed status/message/vehicle status will not be registered.

If a special registration code has to be sent by the user to register, then the qualifier bit is set as before but no registration flags are set on statuses etc. The reception of the registration code will cause the user to be registered, whereas the qualifier bit will prevent other codes from the same user from registering him.

Quiet/Noisy Registration determines the action to be taken at the repeat time for listed but not yet registered users. On active registration these users will be polled again if noisy is set, or just listed onto the console display if quiet is set. On passive registration, for quiet set they are just listed. If noisy is set then a predetermined poll code will be sent.

After registration, unregistered "stranger" users can be given a special display when they are received.

### Summary

In some signalling schemes, the packet of data to be transmitted essentially comprises the data in section 34 of the buffer. In other schemes, the package transmitted results from a combination of the data and the op code in sections 34 and 33 respectively. Depending on the signalling scheme and the particular circumstances, the data 34 may have a number of functions. For example it may define the specific receiver function, eg. illuminate an LED or display a "canned" message. As another example it may poll the operator status - ie. start sending a query command "what is your status", polling each receiver until a particular status is reached. Many other examples can be considered. Alternatively, the data 34 may be supplemented by other data from the keyboard 12 (stored in memory) or the input/output device 22.

In each case, upon initiation of the transmit command (enable transmit function), the buffer sets up the call and the format information defines the manner in which the operation code and data are to be translated into a transmission packet, as well as the signalling format for its transmission. The base station information 32 controls the base station 21 to define the communications path through which the data is to be transmitted (including choice of transmitter, frequency, modulation and baud rate).

Conversely, when data is received, the translation means determines its meaning in terms of the information to be displayed.

## Claims

1. A controller for control of transmission means in a signalling system, the controller comprising a keyboard (12), a data base (14), first and second translation means (18, 19) and transmission means (21 or 22), characterised in that the data base comprises a first plurality of buffers, each buffer having a first data field (30) for defining a signalling format, a second data field (31) for identifying a party or parties to be called, a third data field (32) for defining a physical communications path and a fourth data field (33, 34) for defining an operation code and optional data;
the controller being arranged such that upon initiation of a transmit command, a data buffer sets up a call and for that call the signalling format controls the first translation means (18) for defining the translation of data input at the keyboard into data in the second and fourth data fields and the signalling format for its transmission, the communications path data controls the transmission means setup and the format and the operation code controls the second translation means (19) for translation of the operation code and optional data into the transmitted data package.

2. A controller according to claim 1, further comprising a temporary buffer and means for addressing the temporary buffer for data to be transmitted when there is insufficient capacity therefor in the fourth data field.

3. A controller in accordance with claim 1 or 2, further comprising a second plurality of buffers (28), each having a data field (40) for defining by means of text a party or parties to be called;
the controller being arranged to cross reference from a buffer of the first plurality of buffers to a buffer of the second plurality of buffers to identify and display the text and to identify the remaining data necessary to form a data package for transmission when a transmit command is initiated.

4. A controller according to claim 3, wherein each buffer of the second plurality of buffers (28) comprises first, second and third data fields corresponding to the first second and third data fields of the first plurality of buffers.

5. A controller according to any one of the preceding claims, wherein the data buffer which sets up the call is identified by displaying on the display (17) information corresponding to the contents of the second data field.

6. A controller for control of a radio receiver in a signalling system, the controller comprising a display (17), a data base (14), translations means (20) and receiver means (21 or 22), characterised in that
the data base comprises a first plurality of buffers each buffer having a first data field (30) for defining a signalling format, a second data field (31) for defining a party or parties sending or receiving a call, a fourth data field (33,34) for defining an operation code and optional data;
the controller being arranged such that upon receipt of a message, a data buffer is addressed by that message in accordance with the contents of at least one of the second and fourth data fields and for that message, the signalling format controls the translation means (20) for defining the translation of data received into data to be stored in the fourth data field and/or to be displayed on the display.

7. A controller according to claim 6, further comprising a temporary buffer and means for directing received data to the temporary buffer when there is insufficient capacity therefor in the fourth data field.

8. A controller according to claim 6 or 7, further comprising a third data field (32) for defining a physical communications path and means for recording therein information on the communications path through which a message is received.

9. A controller according to any one of claims 6 to 8, further comprising a second plurality of buffers (28), each having a data field (40) for defining by means of text a party or parties making or receiving a call;
the controller being arranged to cross reference from a buffer of the first plurality of buffers to a buffer of the second plurality of buffers to identify and display the text and to identify the remaining data necessary to define the translation of data received into data to be stored in the fourth data field and/or to be displayed on the display.

10. A controller according to claim 9, wherein each buffer of the second plurality of buffers (28) comprises first and second data fields corresponding to the first and second data fields of the first plurality of buffers.

11. A controller according to any one of the preceding claims further comprising registration means for registering users of the communications system, comprising a list of users and means for logging users which are active in a predetermined time period.

## Patentansprüche

1. Steuereinrichtung zur Steuerung einer Übertragungseinrichtung in einem Signalisierungssystem, wobei die Steuereinrichtung eine Tastatur (12), eine Datenbank (14), eine erste und eine zweite Übersetzungseinrichtung (18, 19) und eine Übertragungseinrichtung (21 oder 22) aufweist, dadurch gekennzeichnet, daß die Datenbank eine erste Vielzahl von Puffern aufweist,
wobei jeder Puffer ein erstes Datenfeld (30) zum Definieren eines Signalisierungsformats, ein zweites Datenfeld (31) zum Identifizieren einer anzurufenden Partei oder Parteien, ein drittes Datenfeld (32) zum Definieren eines physikalischen Kommunikationswegs und ein viertes Datenfeld (33, 34) zum Definieren eines Operationscodes und optioneller Daten aufweist;
wobei die Steuereinrichtung derart eingerichtet ist, daß bei Initialisierung eines Übertragungsbefehls ein Datenpuffer einen Anruf aufbaut und für diesen Anruf das Signalisierungsformat die erste Übersetzungseinrichtung (18) zum Definieren der Übersetzung der Dateneingabe an der Tastatur in Daten im zweiten und vierten Datenfeld und das Signalisierungsformat für ihre Übertragung steuert, die Kommunikationswegdaten die Übertragungseinrichtungs-Einstellung und das Format steuern und der Operationscode die zweite Ubersetzungseinrichtung (19) zur Übersetzung des Operationscodes und der optionellen Daten in das übertragene Datenpacket steuert.

2. Steuereinrichtung nach Anspruch 1, gekennzeichnet durch einen temporären Puffer und einer Einrichtung zum Adressieren des temporären Puffers für die zu übertragenen Daten, wenn es unzureichende Kapazität dafür im vierten Datenfeld gibt.

3. Steuereinrichtung nach Anspruch 1 oder 2, gekennzeichnet durch eine zweite Vielzahl von Puffern (28) jeweils mit einem Datenfeld (40) zum Definieren einer anzurufenden Partei oder Parteien mittels Textes;
wobei die Steuereinrichtung derart eingerichtet ist, daß sie einen Querbezug von einem Puffer der ersten Vielzahl von Puffern zu einem Puffer der zweiten Vielzahl von Puffern einrichtet, um den Text zu identifizieren und anzuzeigen und um die restlichen Daten zu identifizieren, die zum Bilden eines Datenpackets zur Übertragung notwendig sind, wenn ein Übertragungsbefehl initiiert wird.

4. Steuereinrichtung nach Anspruch 3, dadurch gekennzeichnet, daß jeder Puffer der zweiten Vielzahl von Puffern (28) ein erstes, ein zweites, und ein drittes Datenfeld entsprechend dem ersten, zweiten und dritten Datenfeld der ersten Vielzahl von Puffern aufweist.

5. Steuereinrichtung nach einem der vorhergehenden Ansprüche, dadurch gekennzeichnet, daß der Datenpuffer, der den Anruf aufbaut, durch Anzeigen von Information entsprechend dem Inhalt des zweiten Datenfeldes auf der Anzeige (17) identifiziert wird.

6. Steuereinrichtung zur Steuerung eines Radioempfängers in einem Signalisierungssystem, wobei die Steuereinrichtung eine Anzeige (17), eine Datenbank (14) eine Übersetzungseinrichtung (20) und eine Empfängereinrichtung (21 oder 22) aufweist, dadurch gekennzeichnet, daß
die Datenbank eine erste Vielzahl von Puffern aufweist, wobei jeder Puffer ein erstes Datenfeld (30) zum Definieren eines Signalisierungsformats, ein zweites Datenfeld (31) zum Definieren einer Partei oder von Parteien zum Senden und Empfangen eines Anrufs und ein viertes Datenfeld (33, 34) zum Definieren eines Operationscodes und optioneller Daten aufweist;
wobei die Steuereinrichtung derart eingerichtet ist, daß bei Empfang einer Nachricht ein Datenpuffer durch die Nachricht in Übereinstimmung mit dem Inhalt von zumindest einem des zweiten und vierten Datenfelds adressiert wird, und daß für die Nachricht das Signalisierungsformat die Übersetzungseinrichtung (20) zum Definieren der Übersetzung von empfangenen Daten in im vierten Datenfeld zu speichernde Daten und/oder auf der Anzeige anzuzeigende Daten steuert.

7. Steuereinrichtung nach Anspruch 6, gekennzeichnet durch einen temporären Puffer oder eine Einrichtung zum Richten empfangener Daten an den temporären Puffer, wenn es unzureichende Kapazität dafür im vierten Datenfeld gibt.

8. Steuereinrichtung nach Anspruch 6 oder 7, gekennzeichnet durch ein drittes Datenfeld (32) zum Definieren eines physikalischen Kommunikationswegs und eine Einrichtung zum Aufnehmen von Information über den Kommunikationsweg, über den eine Nachricht empfangen wird.

9. Steuereinrichtung nach einem der Ansprüche 6 bis 8, gekennzeichnet durch eine zweite Vielzahl von Puffern (28), wobei jeder ein Datenfeld (40) zum Definieren einer Partei oder Parteien zum Ausführen oder Empfangen eines Anrufes mittels Text aufweist;
wobei die Steuereinrichtung derart eingerichtet ist, daß sie einen Querbezug von einem Puffer der ersten Vielzahl von Puffern zu einem Puffer der zweiten Vielzahl von Puffern zur Identifizierung und zur Anzeige des Textes und zur Identifizierung der restlichen Daten, die zum Definieren der Übersetzung von empfangenen Daten in im vierten Datenfeld die zu speichernden Daten und/oder auf der Anzeige anzuzeigenden Daten erstellt.

10. Steuereinrichtung nach Anspruch 9, dadurch gekennzeichnet, daß jeder Puffer der zweiten Vielzahl von Puffern (28) ein erstes und ein zweites Datenfeld entsprechend dem ersten und zweiten Datenfeld der ersten Vielzahl von Puffern aufweist.

11. Steuereinrichtung nach einem der vorhergehenden Ansprüche, gekennzeichnet durch eine Registrierungseinrichtung zum Registrieren von Benutzern des Kommunikationssystems mit einer Liste von Benutzern und einer Einrichtung zum Eintragen von Benutzern, welche in einer vorbestimmten Zeitspanne aktiv sind.

## Revendications

1. Dispositif de commande permettant de commander un moyen de transmission dans un système de signalisation, le dispositif de commande comprenant un clavier (12), une base de données (14), des premier et deuxième moyens de conversion (18, 19) et un moyen de transmission (21 ou 22), caractérisé en ce que la base de données comprend une première pluralité de tampons, chaque tampon présentant un premier champ de données (30) permettant de définir un format de signalisation, un deuxième champ de données (31) permettant d'identifier une partie ou des parties à appeler, un troisième champ de données (32) permettant de définir un chemin de communication physique et un quatrième champ de données (33, 34) permettant de définir un code de fonctionnement et des données facultatives ;
le dispositif de commande étant conçu de telle sorte qu'après l'initiation d'un ordre de transmission, un tampon de données établit un appel et, pour cet appel, le format de signalisation commande le premier moyen de conversion (18) de façon à définir la conversion de données entrées au moyen du clavier en données dans les deuxième et quatrième champs de données et le format de signalisation en vue de leur transmission, les données du chemin de communication commandent le format et l'établissement du moyen de transmission, et le code de fonctionnement commande le deuxième moyen de conversion (19) afin de convertir le code de fonctionnement et les données facultatives en l'ensemble de données transmises.

2. Dispositif de commande selon la revendication 1, comprenant en outre un tampon temporaire et un moyen permettant d'accéder au tampon temporaire pour obtenir les données à transmettre lorsque le quatrième champ de données présente une capacité insuffisante.

3. Dispositif de commande selon la revendication 1 ou 2, comprenant en outre une deuxième pluralité de tampons (28), chacun présentant un champ de données (40) permettant de définir au moyen de texte une partie ou des parties à appeler ;
le dispositif de commande étant conçu de façon à établir des renvois croisés entre un tampon de la première pluralité de tampons et un tampon de la deuxième pluralité de tampons de façon à identifier et afficher le texte et à identifier les données restantes nécessaires pour former un ensemble de données en vue de leur transmission lorsqu'un ordre de transmission est initié.

4. Dispositif de commande selon la revendication 3, dans lequel chaque tampon de la deuxième pluralité de tampons (28) comprend des premier, deuxième et troisième champs de données correspondant aux premier, deuxième et troisième champs de données de la première pluralité de tampons.

5. Dispositif de commande selon l'une quelconque des revendications précédentes, dans lequel le tampon de données qui établit l'appel est identifié au moyen d'un affichage sur un écran (17) des informations correspondant au contenu du deuxième champ de données.

6. Dispositif de commande permettant de commander un récepteur radio dans un système de signalisation, le dispositif de commande comprenant un écran (17), une base de données (14), un moyen de conversion (20) et un moyen récepteur (21 ou 22) caractérisé en ce que
la base de données comprend une première pluralité de tampons, chaque tampon présentant un premier champ de données (30) permettant de définir un format de signalisation, un deuxième champ de données (31) permettant de définir une partie ou des parties émettant ou recevant un appel, un quatrième champ de données (33, 34) permettant de définir un code de fonctionnement et des données facultatives ;
le dispositif de commande étant conçu de telle sorte qu'au moment de la réception d'un message, un tampon de données est accédé par ce message selon le contenu d'au moins un champ de données parmi le deuxième et le quatrième champs de données et pour ce message, le format de signalisation commande le moyen de conversion (20) de façon à définir la conversion de données reçues en des données à mémoriser dans le quatrième champ de données et/ou à afficher à l'écran.

7. Dispositif de commande selon la revendication 6, comprenant en outre un tampon temporaire et un moyen permettant de diriger des données reçues vers le tampon temporaire lorsque le quatrième champ de données présente une capacité insuffisante pour cela.

8. Dispositif de commande selon la revendication 6 ou 7, comprenant en outre un troisième champ de données (32) permettant de définir un chemin de communication physique et un moyen permettant d'enregistrer des informations sur le chemin de communication grâce auquel un message est reçu.

9. Dispositif de commande selon l'une quelconque des revendications 6 à 8, comprenant en outre une deuxième pluralité de tampons (28), chacun présentant un champ de données (40) permettant de définir au moyen de texte une partie ou des parties émettant ou recevant un appel ;
le dispositif de commande étant conçu de façon à établir des renvois croisés entre un tampon de la première pluralité de tampon et un tampon de la deuxième pluralité de tampons de façon à identifier et afficher le texte et à identifier les données restantes nécessaires pour définir la conversion de données reçues en des données à mémoriser dans le quatrième champ de données et/ou à afficher à l'écran.

10. Dispositif de commande selon la revendication 9, dans lequel chaque tampon de la deuxième pluralité de tampons (28) comprend des premier et deuxième champs de données correspondant aux premier et deuxième champs de la première pluralité de tampons.

11. Dispositif de commande selon l'une quelconque des revendications précédentes comprenant en outre un moyen d'enregistrement permettant d'enregistrer des utilisateurs du système de communication, comprenant une liste d'utilisateurs et un moyen permettant d'enregistrer des utilisateurs qui sont actifs pendant une période de temps prédéterminée.
